# EUROPEAN PATENT SPECIFICATION

(11) **EP 3 860 421 B1**
(45) Date of publication and mention of the grant of the patent: **02.08.2023**
(21) Application number: 19761835.8
(22) Date of filing: 29.08.2019
(51) Int. Cl.: A47L 15/42

(54) **A HEAT PUMP DISHWASHER COMPRISING A DEFROST LINE**
WÄRMEPUMPENGESCHIRRSPÜLER MIT EINER ABTAULEITUNG
LAVE-VAISSELLE À POMPE À CHALEUR COMPRENANT UNE CONDUITE DE DÉGIVRAGE

(30) Priority: 02.10.2018 TR 201814325
(43) Date of publication of application: 11.08.2021
(73) Proprietor: Arçelik Anonim Sirketi, 34445 Istanbul (TR)
(72) Inventor: POYRAZ, Onur, 34950 ISTANBUL (TR); SAGLICAN, Emre, 34950 ISTANBUL (TR); ALPTEKIN, Ahmet, 34950 ISTANBUL (TR); KUTUK, Erkan, 34950 ISTANBUL (TR); AKKAS, Nevin, 34950 ISTANBUL (TR)
(86) International application number: PCT/EP2019/073036
(87) International publication number: WO 2020/069800

(56) References cited:
- EP-A1- 2 096 203
- EP-A1- 2 215 954
- EP-A1- 2 224 049
- EP-A1- 2 728 052
- EP-A1- 2 978 360
- EP-A1- 3 372 140
- CH-A2- 699 692
- DE-A1-102004 005 540

## Description

The present invention relates to a heat pump dishwasher.

The heat pump system in the heat pump dishwashers is composed of a compressor which provides the circulation of a refrigerant (refrigerant fluid), a condenser, an evaporator, and an expansion element. Said components are connected to each other by means of a pipe line, and by means of the fluid passing through the pipe line, the cycle is performed. The aim of said cycle is to heat the washing water. To this end, the evaporator draws heat from the environment to the heat pump system, and the condenser transfers the heat of the heat pump system to the washing water. In some embodiments, the evaporator, which is of air source type, draws heat from the environment and transfers, together with the compressor, heat to the condenser. The condenser transfers the heat to the washing water in the dishwasher. In such a heat pump dishwasher, the temperature of the outer environment is not sufficient for the evaporator, and it is required to transfer more stable heat to the evaporator. An evaporator which can draw heat both from the ambient air and from water to solve this problem is disclosed in the International Patent Application No. PCT/EP2018/056400, published as WO2018/188883A1 and potentially prior art under Article 54(3) EPC. Basically, when the temperature in an environment wherein an evaporator, which operates with air but uses water as an auxiliary heat source, decreases, the heat drawn by the evaporator also decreases. If the heat pump is operated in ambient conditions colder than normal, for example between 0°C and 10°C, the temperature of the evaporator falls below 0°C to draw heat from the environment. In this case, since the water is frozen in an evaporator which uses water as an auxiliary heat source, water circulation in the pipe delivering water to the evaporator stops. In this case, the evaporator tries to draw heat only from the air source, that is the ambient air, and cannot draw heat from water. Therefore, the heat pump efficiency decreases while energy consumption increases. Moreover, since the volume of the water frozen in the pipes delivering water to the evaporator increases, the pipes may explode due to expansion.

The Patent No. EP2594185 (B1) relates to a heat pump dishwasher. The evaporator operates in the waste water tank, and thus the heat pump draws heat from the water in the waste water tank. The Patent No. EP2658430 (B1) relates to a heat pump dishwasher. The evaporator and the condenser are disposed in separate water tanks.

In the state of the art the European patent application no. EP2978360 relates to the washing apparatus of the invention includes a heat pump.

In the state of the art the European patent application no. EP2215954 relates to a dishwasher and a method to improve the energy efficiency of a dishwasher.

In the state of the art the European patent application no. EP3372140 relates to a dishwasher comprising a water tank which is arranged adjacent to the washing tank and which is fluidically connected to the water tank.

The aim of the present invention is the realization of a heat pump dishwasher wherein the problem of freezing in the evaporator is eliminated, thus decreasing energy consumption.

The dishwasher realized in order to attain the aim of the present invention is defined in independent claim 1. Such a dishwasher is of heat pump type, and comprises a compressor, a condenser, and an evaporator. For instance, heating pipes are provided between the refrigerant pipes in the evaporator, and the evaporator draws heat from the hot water flowing through the heating pipes. A container is disposed on the compressor and/or an electronic card controlling the compressor, and the water in the container is heated. By means of a defrost line, the hot water in the container is circulated in the heating pipes in the evaporator.

A heat pump dishwasher is illustrated in the attached figures, where:
Figure 1 - is the schematic view of a heat pump dishwasher.
Figure 2 - is the detailed schematic view of the dishwasher in an embodiment of the present invention.
Figure 3 - is the detailed schematic view of the dishwasher in another embodiment of the present invention.
Figure 4 - is the detailed schematic view of another heat pump dishwasher

The elements illustrated in the figures are numbered as follows:
1. Dishwasher
2. Tub
3. Sump
4. Discharge pump
5. Heat pump
6. Compressor
7. Electronic card
8. Condenser
9. Refrigerant tube
10. Evaporator
11. Heating pipe
12. Container
13. Defrost pump
14. Defrost line
15. Condensation receptacle
16. Water supply line
17. Water supply pump
18. Auxiliary water tank
19. Drying duct
20. Mains tap
21. Fan
22. Circulation pump
23. Rack
24. Expansion element

The dishwasher (1) comprises a tub (2); a circulation pump (22) which provides the delivery of the washing water into the washing environment in the tub (2); a sump (3) which is disposed under the tub (2) and wherein the washing water is collected; a discharge pump (4) which enables the water collected in the sump (3) at the end of the washing process to be discharged to the outside; at least one rack (23) wherein the dishes to be washed are loaded; and a heat pump (5) which heats the washing water.

The heat pump (5) comprises a compressor (6) which performs the refrigerant cycle; an electronic card (7) which controls the compressor (6); a condenser (8) which is used for heating the washing water; an evaporator (10) which draws heat from the outer environment and which is composed of refrigerant tubes (9) and of fins; and an expansion element (24), for example a capillary tube or an expansion valve, which is disposed between the condenser (8) and the evaporator (10) and which decreases the pressure of the refrigerant.

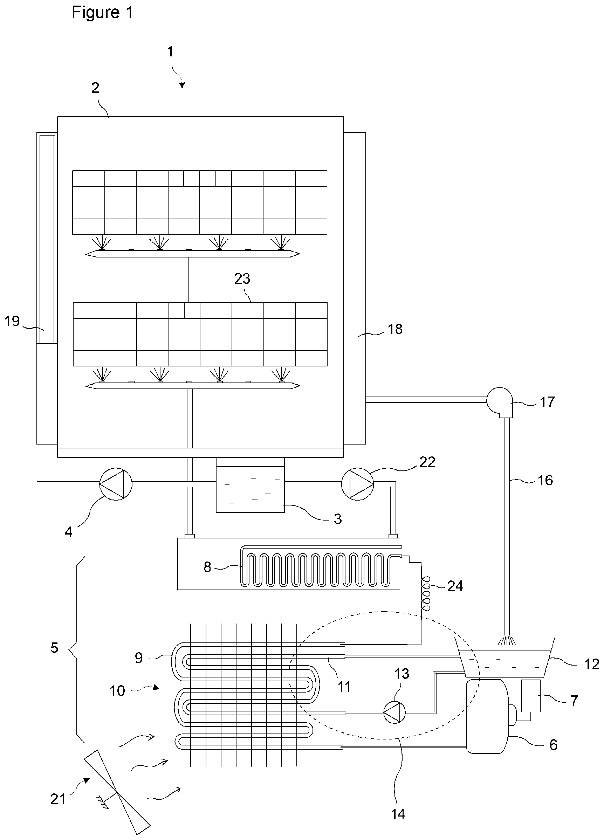

The dishwasher (1) of the present invention comprises
- at least one heating pipe (11) which is disposed between the refrigerant tubes (9) of the evaporator (10) and through which hot water is passed,
- a container (12) which is disposed on the compressor (6) and/or the electronica card (7), and
- a defrost line (14) which provides the circulation of the water, which is heated in the container (12) by the compressor (6) and/or the electronic card (7) during the operation of the heat pump (5), between the container (12) and the heating pipe (11) by means of a defrost pump (13) (Figure 1).

The container (12), which is produced from a heat-conducting material is disposed on the compressor (6) and/or the electronic card (7). The water in the container (12) is delivered to the heating pipes (11) in the evaporator (10) by means of the defrost pump (13) and the defrost line (14) so as to be circulated. Since the temperature of the water delivered to the evaporator (10) is increased, the risk of freezing is decreased. Since the heat drawn by the evaporator (10) from the outside increases, the performance thereof is improved while decreasing the operational time of the heat pump (5). The hot water in the heating pipe (11) cools down while circulating in the evaporator (10) and returns to the container (12) in cold state. Thus, the compressor (6) and/or the electronic card (7) which continuously heats the water in the container (12) is enabled to be cooled down, increasing the working life of the compressor (6) and preventing malfunctions by cooling down the components in the electronic card (7) which excessively heat up.

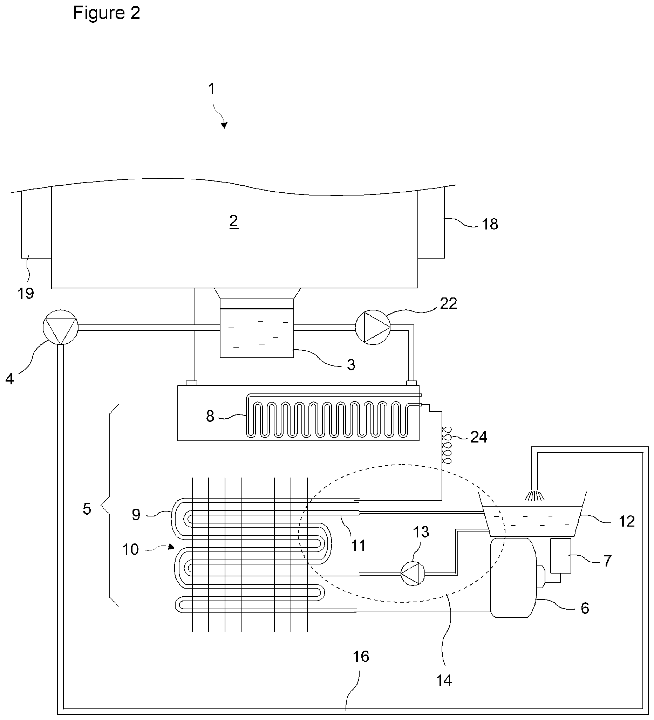

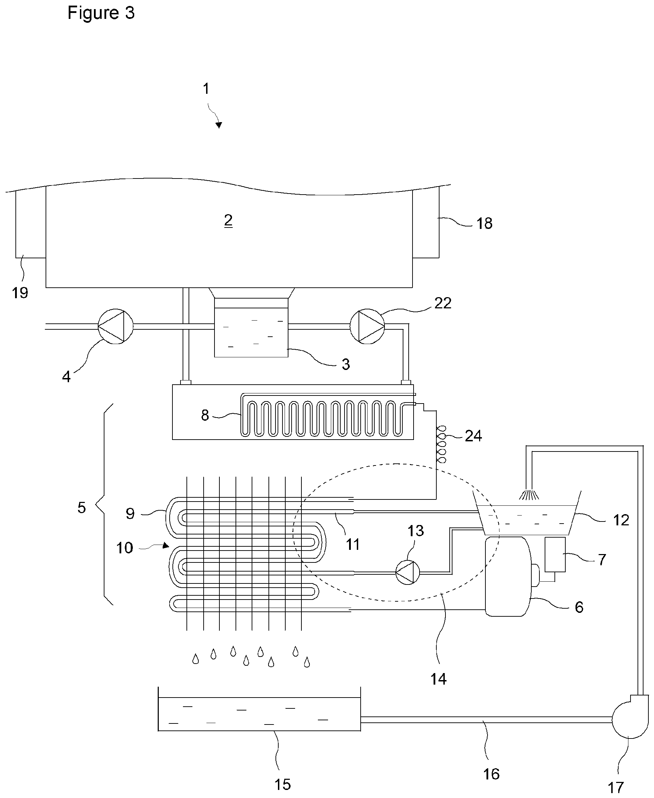

In an embodiment of the present invention, waste washing water, which is collected in the sump (3), is delivered to the container (12) by means of the discharge pump (4) and a water supply line (16) so as to be heated and circulated in the defrost line (14). The sump (3) is used as a water source for the container (12). The discharge pump (4) delivers the water collected in the sump (3) at the end of the washing process to the container (12). Thus, the discharged water, which is already hot, is heated more with the waste heat of the compressor (6) and/or the electronic card (7) to be delivered to the heating pipes (11) in the evaporator (10) (Figure 2). In another embodiment of the present invention, the dishwasher (1) comprises a condensation receptacle (15) which is disposed under the evaporator (10) and wherein the water condensing on the evaporator (10) surface is collected, and the water collected in the condensation receptacle (15) is delivered into the container (12) by means of the water supply line (16) and a water supply pump (17) so as to be heated. The condensation receptacle (15) is used as a water source for the container (12) (Figure 3).

In an example which does not form part of the present invention, the dishwasher (1) comprises an auxiliary water tank (18) which enables the water to be collected before the washing process and brought to the ambient temperature and thus shortening the water heating time during the washing process and providing savings in energy, and the water in the auxiliary water tank (18) is delivered into the container (12) by means of the water supply line (16) and the water supply pump (17) so as to be heated. The auxiliary water tank (18) is used as a water source for the container (12) (Figure 1).

In an example which does not form part of the present invention, the dishwasher (1) comprises a drying duct (19) which takes the humid air in the tub (2) out of the tub (2) after the washing process and thus enables the washed items to be dried, and the water in the drying duct (19) is delivered into the container (12) by means of the water supply line (16) and the water supply pump (17). The drying duct (19) is used as a water source for the container (12).

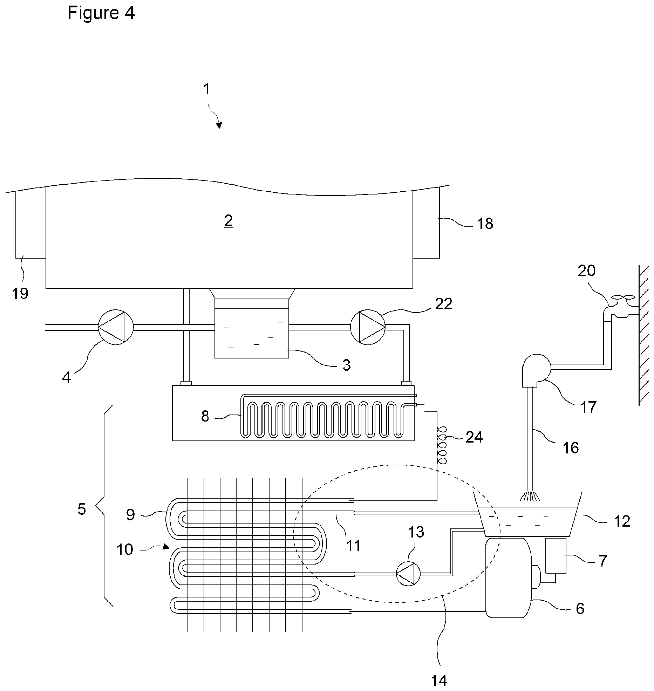

In an example which does not form part of the present invention, the water taken from the water mains (20) is delivered into the container (12) by means of the water supply line (16) and the water supply pump (17) so as to be heated (Figure 4).

In another embodiment of the present invention, the evaporator (10) is an evaporator (10) which is heated by air in addition to the water circulated therein by means of the heating pipes (11), and the dishwasher (1) comprises at least one fan (21) which provides the heat transfer by blowing the ambient air onto the evaporator (10) (Figure 1).

In the dishwasher (1) of the present invention, the defrost line (14) eliminates the problem of freezing in the heating pipes (11) which circulate hot water in the evaporator (10). The water, the temperature of which increases in the container (12) with the waste heat of the compressor (6), increases the heat absorption capacity of the evaporator (10), thus decreasing energy consumption. The compressor (6) and the electronic card (7) are cooled down, thus preventing malfunctions.

## Claims

1. - A dishwasher (1) **comprising** a tub (2); a sump (3) which is disposed under the tub (2) and wherein washing water is collected; a discharge pump (4) which enables water collected in the sump (3) at the end of a washing process to be discharged to the outside; a heat pump (5) which heats the washing water; and a compressor (6), an electronic card (7), a condenser (8) and an evaporator (10) composed of refrigerant tubes (9) and fins, which all together constitute the heat pump (5), and a container (12) which is disposed on the compressor (6) and/or an electronic card (7), **characterized in that** the dishwasher comprises at least one heating pipe (11) which is disposed between the refrigerant tubes (9) of the evaporator (10) and through which hot water is passed, a defrost line (14) which provides circulation of the water, which is heated in the container (12) by the compressor (6) and/or the electronic card (7), between the container (12) and the heating pipe (11) by means of a defrost pump (13) wherein the dishwasher is further **characterized by** the discharge pump (4) and a water supply line (16) which enable waste washing water, which is collected in the sump (3), to be delivered to the container (12) so as to be heated and circulated in the defrost line (14), or wherein the dishwasher is further **characterized by** a condensation receptacle (15) wherein water condensing on the evaporator (10) surface is collected, and by the water supply line (16) and a water supply pump (17) which enable the water in the condensation receptacle (15) to be delivered into the container (12) so as to be heated.

2. - A dishwasher (1) as in Claim 1, **characterized by** the evaporator (10) which is heated by air in addition to water, and by at least one fan (21) which provides the heat transfer by blowing the ambient air onto the evaporator (10).

## Patentansprüche

1. - Eine Geschirrspülmaschine (1) **umfasst** eine Wanne (2); einen Sumpf (3), der unter der Wanne (2) angeordnet ist und in dem das Waschwasser gesammelt wird; eine Ablaufpumpe (4), die es ermöglicht, im Sumpf (3) gesammeltes Wasser am Ende eines Waschvorgangs nach außen abzulassen; eine Wärmepumpe (5), die das Waschwasser erwärmt; und einen Kompressor (6), eine elektronische Karte (7), einen Kondensator (8) und einen Verdampfer (10), bestehend aus Kältemittelrohren (9) und Rippen, die alle zusammen die Wärmepumpe (5) bilden, einen Behälter (12), der auf dem Kompressor (6) und/oder einer elektronischen Karte (7) angeordnet ist, **gekennzeichnet ist es dadurch,** dass die Geschirrspülmaschine mindestens ein Heizrohr (11) umfasst, das zwischen den Kältemittelrohren (9) des Verdampfers (10) angeordnet ist und durch das heißes Wasser geleitet wird, eine Abtauleitung (14), die für eine Zirkulation des Wassers sorgt, das im Behälter (12) durch den Kompressor (6) und/oder die elektronische Karte (7) erwärmt wird, zwischen dem Behälter (12) und dem Heizrohr (11) mittels einer Abtaupumpe (13), wobei die Geschirrspülmaschine weiterhin durch die Ablaufpumpe (4) und eine Wasserversorgungsleitung (16) gekennzeichnet ist, die Abwasserspülwasser ermöglichen, das im Sumpf (3) gesammelt wird, um in den Behälter (12) gefördert zu werden, um dort erhitzt und in der Abtauleitung (14) zirkuliert zu werden, oder wobei der Geschirrspüler weiterhin durch einen Kondenswasserbehälter (15) gekennzeichnet ist, in dem auf der Oberfläche des Verdampfers (10) kondensierendes Wasser gesammelt wird, und durch die Wasserversorgungsleitung (16) und eine Wasserversorgungspumpe (17), die es ermöglichen, das Wasser im Kondensationsbehälter (15) zum Erhitzen in den Behälter (12) zu fördern.

2. - Eine Geschirrspülmaschine (1), wie in Anspruch 1 aufgeführt, **ist dadurch gekennzeichnet, dass** der Verdampfer (10) neben Wasser auch durch Luft erwärmt wird, und durch mindestens einen Ventilator (21), der für die Wärmeübertragung durch Anblasen der Umgebungsluft auf den Verdampfer (10) sorgt.

## Revendications

1. - Un lave-vaisselle (1) **comprenant** une baignoire (2) ; un puisard (3) disposé sous la baignoire (2) et dans lequel l'eau de lavage est recueillie ; une pompe d'évacuation (4) qui permet d'évacuer vers l'extérieur l'eau recueillie dans le puisard (3) à la fin d'un processus de lavage ; une pompe à chaleur (5) qui réchauffe l'eau de lavage ; et un compresseur (6), une carte électronique (7), un condenseur (8) et un évaporateur (10) composés de tubes réfrigérants (9) et d'ailettes, qui constituent ensemble la pompe à chaleur (5), un réservoir (12) disposé sur le compresseur (6) et/ou une carte électronique (7), **caractérisé en ce que** le lave-vaisselle comprend au moins un tuyau de chauffage (11) qui est disposé entre les tubes réfrigérants (9) de l'évaporateur (10) et à travers lequel l'eau chaude passe, une ligne de dégivrage (14) qui assure la circulation de l'eau, qui est chauffée dans le récipient (12) par le compresseur (6) et/ou la carte électronique (7), entre le récipient (12) et le tuyau de chauffage (11) au moyen d'une pompe de dégivrage (13), le lave-vaisselle étant en outre **caractérisé par** la pompe d'évacuation (4) et une conduite d'alimentation en eau (16) qui permettent à l'eau de lavage usée, collectée dans le puisard (3), d'être acheminée vers le récipient (12) afin d'être chauffée et de circuler dans la conduite de dégivrage (14), ou dans lequel le lave-vaisselle est en outre **caractérisé par** un récipient de condensation (15) dans lequel l'eau se condensant sur la surface de l'évaporateur (10) est recueillie, et par la conduite d'alimentation en eau (16) et une pompe d'alimentation en eau (17) qui permettent à l'eau dans le récipient de condensation (15) d'être acheminée dans le conteneur (12) afin d'être chauffée.

2. - Un lave-vaisselle (1) selon la déclaration 1, **caractérisé par** l'évaporateur (10) qui est chauffé par l'air en plus de l'eau, et par au moins un ventilateur (21) qui assure le transfert de chaleur en soufflant l'air ambiant sur l'évaporateur (10).
